# EUROPÄISCHE PATENTSCHRIFT

(11) **EP 2 251 141 B1**
(45) Veröffentlichungstag und Bekanntmachung des Hinweises auf die Patenterteilung: **18.01.2012**
(21) Anmeldenummer: 09006648.1
(22) Anmeldetag: 16.05.2009
(51) Int. Cl.: B24B 55/06, B23Q 11/00, B23Q 11/08

(54) **Maschinenanordnung mit einer Absaughaube**
Machine assembly with an extractor hood
Agencement de machine doté d'un capot d'aspiration

(43) Veröffentlichungstag der Anmeldung: 17.11.2010
(73) Patentinhaber: IMA Klessmann GmbH Holzbearbeitungssysteme, 32312 Lübbecke (DE)
(72) Erfinder: Fritsch, Andree, Dr.-Ing., 89155 Erbach-Ringingen (DE); Dressler, Martin, Dr.-Ing., 73614 Schorndorf-Weiler (DE)
(74) Vertreter: Wasmuth, Rolf

(56) Entgegenhaltungen:
- DE-A1- 4 239 367
- DE-A1- 19 629 120
- DE-A1-102005 063 017
- JP-A- 2005 324 290

## Beschreibung

Die Erfindung betrifft eine Maschinenanordnung zum zerspanenden Bearbeiten von Werkstücken mit den Merkmalen nach dem Oberbegriff des Anspruchs 1.

Im Betrieb von gattungsgemäßen Maschinenanordnungen entstehen beim Zerspanen des Werkstückes große Mengen an Spänen, die vom Arbeitsbereich entfernt werden müssen. Hierzu sind Absaughauben in verschiedener Ausgestaltung bekannt, die den Arbeitsbereich überdecken, und mittels derer die anfallenden Späne abgesaugt werden.

Die vorbekannten Absaugeinrichtungen lassen sich in zwei unterschiedliche Konzeptprinzipien aufteilen. Zum einen gibt es großflächige Absaughauben, die maschinenfest angeordnet sind, und die das Zerspanungswerkzeug und dessen Bearbeitungsbereich derart großflächig abdecken, dass Werkzeuge unterschiedlicher Größe ohne Entfernung bzw. Auswechslung der Absaughaube eingesetzt werden können. Derartige Absaughauben sind dazu fest an der Maschine installiert. Nachteilig ist hierbei, dass die Absaugwirkung nur eingeschränkt ist und sich nicht unmittelbar auf.den Entstehungsort der Späne konzentrieren lässt.

Andererseits sind Konzepte bekannt, bei denen die Absaughaube an der drehenden Werkzeugspindel bzw. an deren mitdrehendem Spannfutter angeordnet ist. Eine derartige Anordnung ist beispielsweise aus der DE 10 2007 030 858 A1 bekannt. Eine solche Anordnung ermöglicht den Einsatz vergleichsweise kleiner Absaughauben, die das Zerspanungswerkzeug mit geringem Abstand unmittelbar umschließen und eine Absaugung der Späne nahezu unmittelbar an ihrem Entstehungsort ermöglichen. Die Befestigung der Absaughaube an der drehenden Werkzeugspindel macht eine Lagerung erforderlich, damit die Absaughaube passgenau zur drehenden Werkzeugspindel fluchtet, ohne sich selbst mitzudrehen. Diese Lagerung ist nach der DE 10 2007 030 858 A1 als Wälzlagerung ausgeführt, um den hohen Nenndrehzahlen standhalten zu können.

Trotz der verbesserten Absaugwirkung zeigen sich verschiedene Nachteile. Auf derartigen Maschinen werden verschiedenartige Bearbeitungsvorgänge durchgeführt, die Trennschnitte mit kleinen Schneidenkreisdurchmessern sowie Abplatt- oder Profilierschnitte mit Werkzeugen mit großen Schneidenkreisdurchmessern umfassen. Um für die Absaugung der Späne eine ausreichenden Luftstrom gewährleisten zu können, muss die Absaughaube an die Geometrie des jeweiligen Werkzeuges angepasst sein, was ein Auswechseln der Absaughaube gemeinsam mit dem Werkzeug erforderlich macht. Die vorgesehene Lagerung erschwert dieses Auswechseln der Haube. Außerdem hat sich in der Praxis gezeigt, dass die eingesetzten Kugellager nur eine geringe Lebensdauer aufweisen, da Spänestaub in die Lager eindringt. In den genannten hohen Drehzahlbereichen werden bevorzugt monolithische Werkzeugaufnahmen wie Schrumpffutter, Dehnspannfutter oder dergleichen eingesetzt, um hohe Rundlaufgenauigkeiten unter Minimierung von Unwuchtmassen zu erzielen. Die auf der Werkzeugspindel bzw. auf deren Spannfutter gelagerte Absaughaube erschwert jedoch beim Werkzeugwechsel den Zugriff auf das Spannfutter. Die Betätigung eines Schrumpffutters ist durch die am Werkzeugträger gelagerte Absaughaube nur mit sehr hohem Aufwand möglich.

Aus der DE 196 29 120 A1 ist eine gattungsgemäße Werkzeugmaschine zum zerspanenden Bearbeiten von Werkstücken bekannt.

Der Erfindung liegt die Aufgabe zugrunde, die gattungsgemäße Maschinenanordnung derart weiterzubilden, dass bei konstruktiv einfachem und zuverlässigem Aufbau ein verbesserter Zugriff auf das Spannfutter möglich ist.

Diese Aufgabe wird durch eine Maschinenanordnung mit den Merkmalen des Anspruchs 1 gelöst.

Hierzu wird vorgeschlagen, dass die Absaughaube direkt am die Werkzeugspindel aufnehmenden Lagerhals auswechselbar und ohne Kontakt mit der Werkzeugspindel befestigt ist, wobei zur axialen Sicherung der Absaughaube gegenüber dem Lagerhals mindestens ein Magnet vorgesehen ist. Hierzu ist insbesondere ein Schnellverschluss, bevorzugt in Form eines Bajonettverschlusses vorgesehen. Die Befestigung der Absaughaube am Lagerhals erlaubt eine kleinvolumige Ausgestaltung, die den unmittelbaren Werkzeugbereich umschließt und damit eine zielgenaue Absaugung der entstehenden Späne ermöglicht. Am Lagerhals ist außerdem eine genaue Zentrierung der Absaughaube gegenüber der Werkzeugspindel bzw. deren Spannfutter möglich. Auf eine Lagerung gegenüber der Werkzeugspindel bzw. gegenüber dem Spannfutter wird verzichtet, so dass hier kein spänebedingter Verschleiß eintritt. Die Anordnung eines Schnellverschlusses insbesondere in Form des genannten Bajonettverschlusses ermöglicht ein schnelles und insbesondere automatisiertes Wechseln bzw. Abnehmen der Absaughaube, was den Zugriff auf das Spannfutter beim Werkzeugwechsel erleichtert. Beim Einsatz unterschiedlicher Werkzeuge kann mit einem automatisierten Werkzeugwechsler gleichzeitig auch die jeweils passende Absaughaube angebracht werden. Durch den fehlenden Kontakt der Absaughaube mit der Werkzeugspindel und insbesondere durch das Fehlen einer Lagerung zwischen beiden Bauteilen unterliegt dieser Bereich keinerlei Verschleiß, wodurch Lebensdauer und Zuverlässigkeit der Anordnung erhöht werden.

Zur axialen Sicherung der Absaughaube gegenüber dem Lagerhals sind mindestens ein Magnet, bevorzugt drei um die Drehachse herum verteilte Magnete vorgesehen. Diese ermöglichen es, die Absaughaube zunächst provisorisch am Lagerhals der Werkzeugmaschine anzuheften. Während des weiteren Montagevorganges kann die Absaughaube nicht herabfallen. Gleichzeitig kann sie jedoch zum Schließen der Bajonettverbindung gedreht werden, wodurch dann abschließend eine Fixierung der Absaughaube gegenüber dem Lagerhals erfolgt. Umgekehrt führt ein Lösen der Bajonettverbindung nicht sofort zu einem Herausfallen der Absaughaube. Vielmehr muss diese aktiv gegen die Kraft des oder der Magnete abgezogen werden, was die automatisierte Montage bzw. Demontage der Absaughaube beispielsweise mittels eines Werkzeugwechslers vereinfacht.

Es kann zweckmäßig sein, die Magnete am Lagerhals anzuordnen. Bevorzugt ist der mindestens eine Magnet an der Absaughaube befestigt und insbesondere an einem freien Ende eines Trägerzapfens davon angeordnet. Bei abgenommener Absaughaube bleiben hierdurch der Lagerhals und die Werkzeugspindel frei von ansonsten störenden Magnetkräften. Die Anordnung des mindestens einen Magneten am freien Ende eines Trägerzapfens erlaubt außerdem die Überbrückung einer Distanz zwischen der Absaughaube und der Stirnfläche des Lagerhalses, wodurch die Absaughaube kleinvolumig mit verbesserter Absaugwirkung ausgestaltet werden kann und dennoch unmittelbar den Zerspanungsbereich umschließt.

In einer vorteilhaften Ausführungsform ist zur Bildung des Bajonettverschlusses ein am Lagerhals befestigter Bajonettring mit mindestens einem radial hervorstehenden Haltevorsprung vorgesehen. Der mindestens eine Trägerzapfen weist hierbei einen Schlitz insbesondere in Form einer Umfangsnut zur Aufnahme des Haltevorsprungs auf. Dem Trägerzapfen kommt damit eine Doppelfunktion zu, indem er einerseits der provisorischen Magnetfixierung und andererseits der abschließenden Bajonettfixierung dient. Die Konstruktion ist einfach im Aufbau und zuverlässig im Betrieb.

Die Absaughaube weist zweckmäßig eine Radialwand mit einer mittigen Spindelöffnung auf, wobei die Spindelöffnung ein Spannfutter der Werkzeugspindel mit einem Spalt berührungsfrei umschließt. Der Spalt kann sehr klein ausgestaltet sein, wodurch die Absaugwirkung nicht nennenswert beeinträchtigt wird. Darüber hinaus ist der Spalt unempfindlich gegen Verschmutzung und Verschleiß durch Späne und Staub. Die Anordnung der Radialwand direkt am Spannfutter bzw. an der Werkzeugaufnahme führt dazu, dass der axiale Abstand zwischen der Radialwand und der Zerspanungsstelle minimiert ist. Das von der Absaughaube umschlossene Volumen wird hierdurch miniert, was die Absaugwirkung verbessert.

Die erfindungsgemäße Anordnung ist grundsätzlich für alle zerspanenden Maschinenanordnungen geeignet. Besonders vorteilhaft ist sie einsetzbar bei Werkzeugmaschinen insbesondere zur spanenden Bearbeitung von holzartigen Werkstoffen wie Spanplatten oder dergleichen, wobei die Werkzeugspindel eine Nenndrehzahl von > 15.000 min⁻¹, insbesondere von > 20.000 min⁻¹ aufweist, und wobei das Spannfutter der Werkzeugspindel als Schrumpffutter oder als Dehnspannfutter ausgebildet ist. Diese für die genannten sehr hohen Drehzahlen geeigneten Spannfutter mit geringer Unwuchtmasse erfordern beim Werkzeugwechsel einen freien Zugriff, der durch die erfindungsgemäße Ausgestaltung ohne weiteres möglich ist. Durch den Verzicht auf einen Kontakt und insbesondere auf eine Lagerung zwischen der Absaughaube und der Werkzeugspindel kann die Maschine mit den genannten hohen Drehzahlen betrieben werden, ohne dass nennenswerter Verschleiß eintritt. Das unter den genannten Umständen auftretende sehr hohe Spanvolumen kann zielgenau abgesaugt werden.

Ein Ausführungsbeispiel der Erfindung wird nachfolgend anhand der Zeichnung näher beschrieben. Es zeigen:
- Fig. 1: in einer Seitenansicht eine erfindungsgemäß ausge- führte Maschinenanordnung zum zerspanenden Bearbeiten von Werkstücken mit einem Lagerhals, einer Werkzeug- spindel und einer Absaughaube, wobei die Absaughaube am Lagerhals auswechselbar und ohne Kontakt mit der Werkzeugspindel befestigt ist;
- Fig. 2: eine Längsschnittdarstellung der Anordnung nach Fig. 1 mit eingesetztem Werkzeug und mit Einzelheiten zu einer kombinierten Magnet- und Bajonettbefestigung der Absaughaube am Lagerhals;
- Fig. 3: eine Draufsicht eines Bajonettringes zur Bildung des Bajonettverschlusses nach den Fig. 1 und 2 mit Einzel- heiten zu seiner geometrischen Ausgestaltung;
- Fig. 4: eine Unteransicht der Anordnung nach Fig. 1 mit Einzelheiten zum Zusammenwirken des Bajonettringes nach Fig. 3 mit der Absaughaube.

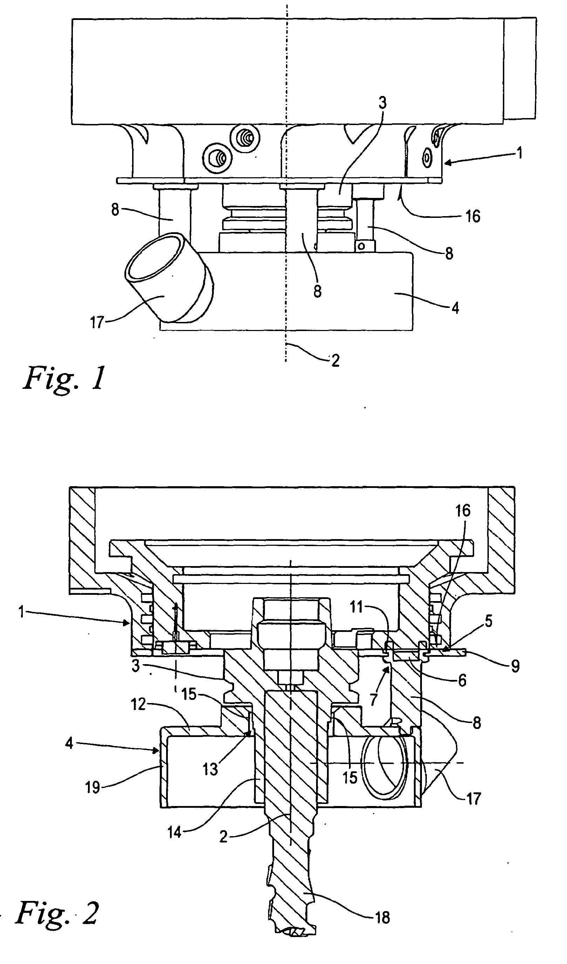

Fig. 1 zeigt in einer Seitenansicht eine erfindungsgemäße Maschinenanordnung im Bereich eines Lagerhalses 1 einer Werkzeugmaschine, die im gezeigten Ausführungsbeispiel zum zerspanenden Bearbeiten von holzartigen Werkstoffen wie Spanplatten oder dergleichen vorgesehen ist. Im Lagerhals 1 ist eine Werkzeugspindel 3 um eine Drehachse 2 drehbar gelagert und wird im Betrieb über einen nicht dargestellten Antriebsmotor drehend angetrieben. Der Lagerhals 1 kann Teil eines Getriebegehäuses sein und ist im gezeigten Ausführungsbeispiel Teil eines Motorgehäuses für den Direktantrieb der Werkzeugspindel 3. Der Lagerhals 1 ist also hierbei durch einen Motorhals gebildet und stellt das unmittelbar dem in Fig. 2 dargestellten Werkzeug 18 zugewandte Ende der Lagereinheit dar Die Werkzeugspindel 3 ragt über eine werkzeugseitige Stirnfläche 16 des Lagerhalses 1 hervor. Ihr außenseitiges Ende wird von einer Absaughaube 4 umgriffen. Die Absaughaube 4 ist mit einem Saugstutzen 17 versehen, an dem ein nicht dargestellter Saugschlauch angeschlossen wird. Das mittels des Werkzeuges 18 (Fig. 2) erzeugte Spanvolumen wird von der Absaughaube 4 aufgefangen und durch den Saugstutzen 17 abgesaugt.

Die Absaughaube 4 ist an der Stirnfläche 16 des Lagerhalses 1 lösbar bzw. auswechselbar befestigt. Hierzu ist die Absaughaube 4 mit drei Trägerzapfen 8 versehen, die bezogen auf die Drehachse 2 um die Werkzeugspindel 3 herum angeordnet sind und an der Stirnfläche 16 lösbar befestigt sind. Es kann auch eine abweichende Anzahl von Trägerzapfen 8 zweckmäßig sein. Die Befestigungsfunktion der Trägerzapfen 8 ist weiter unten im Zusammenhang mit den Fig. 2 bis 4 näher beschrieben. Darüber hinaus geben sie einen Abstand zwischen der Absaughaube 4 und der Stirnfläche 16 des Lagerhalses 1 vor.

Fig. 2 zeigt eine Längsschnittdarstellung der Anordnung nach Fig. 1, die bezogen auf die Drehachse 2 um 180° gegenüber der Darstellung nach Fig. 1 gedreht ist. Die Werkzeugspindel 3 umfasst in vorliegender Definition das Spannfutter 14 sowie eine nicht dargestellte Antriebsspindel, die das Spannfutter 14 aufnimmt. Das endseitig der Werkzeugspindel 3 angeordnete Spannfutter 14 ist als monolithisches Schrumpffutter ausgestaltet, in welches ein zerspanendes Werkzeug 18 eingesetzt ist. Weitere Teile der Werkzeugspindel 3 und insbesondere deren Lagerung im Lagerhals 1 sind der besseren Übersichtlichkeit halber nicht dargestellt. Das Spannfutter 14 ist im gezeigten Ausführungsbeispiel ein Schrumpffutter, kann aber auch als Dehnspannfutter ausgestaltet sein. Außerdem sind andere Bauformen eines Spannfutters 14 möglich.

Die Absaughaube 4 umgreift die Werkzeugspindel 3 bzw. deren Spannfutter 14. Sie ist glockenförmig ausgebildet und umfasst eine Radialwand 12 sowie eine Umfangswand 19. Die Umfangswand 19 steht in der durch die Drehachse 2 vorgegebenen Axialrichtung über das freie Ende des Spannfutters 14 in Richtung zum Werkzeug 18 vor. Der durch die Umfangswand 19 hindurchgeführte Saugstutzen 17 ist außenseitig nach oben zum Lagerhals 1 hin abgewinkelt, verläuft aber innenseitig der Umfangswand 19 in radialer Richtung auf die Drehachse 2 zu. Die Absaughaube 4 ist ohne Kontakt mit der Werkzeugspindel 3 bzw. deren Spannfutter 14 und auch ohne Kontakt zum Werkzeug 18 in weiter unten näher beschriebener Weise am Lagerhals befestigt. Hierzu weist die Absaughaube 4 in der Radialwand 14 eine mittige Spindelöffnung 13 auf, durch die die Werkzeugspindel 3 kontaktfrei hindurchgeführt ist. Zwischen der Werkzeugspindel 3 und der Spindelöffnung 13 verbleibt ein umlaufender schmaler Spalt 15. Eine Lagerung zwischen der Absaughaube 4 und der Werkzeugspindel 3 ist nicht vorgesehen. Vielmehr ist die Absaughaube 4 drehfest am Lagerhals 1 befestigt, wobei der Spalt 15 eine schnelle Drehbewegung der Werkzeugspindel 3 mit dem Werkzeug 18 um die Drehachse 2 mit hoher Drehzahl ermöglicht. Die Nenndrehzahl der Werkzeugspindel 3 ist größer als 15.000 min⁻¹, insbesondere > 20.000 min⁻¹ und liegt im gezeigten Ausführungsbeispiel in einem Bereich von 20.000 min⁻¹ bis 24.000 min-¹. Der Spalt 15 vermeidet einen Verschleiß zwischen der Absaughaube 4 und der Werkzeugspindel 3, ist jedoch schmal genug, dass das durch das Werkzeug 18 erzeugte Spanaufkommen aus dem Innenraum der Absaughaube 4 mittels des Saugstutzens 17 abgesaugt werden kann. Die durch den schmalen Spalt 15 dabei angesaugte Nebenluft ist vernachlässigbar gering.

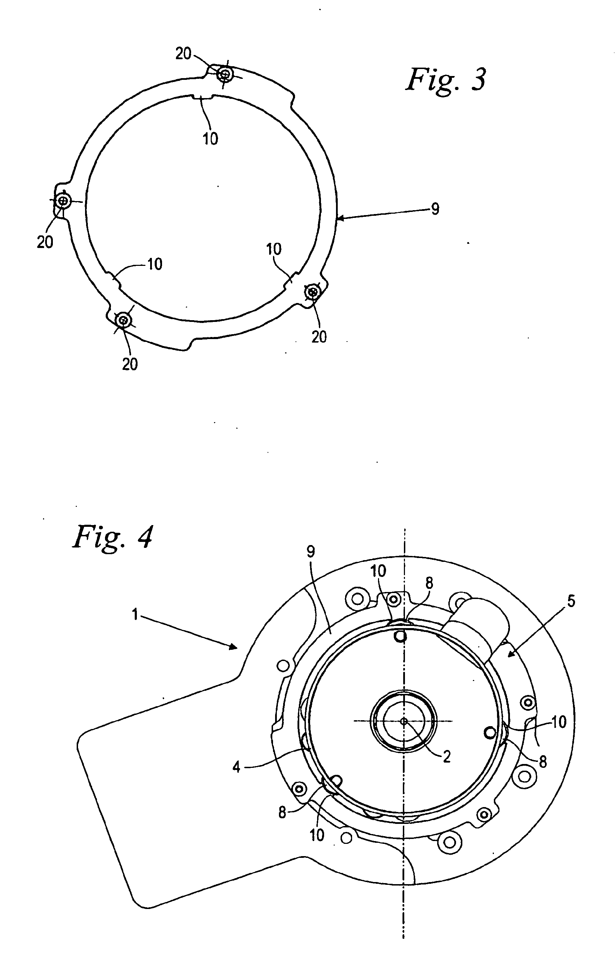

Zur Einstellung des axialen Abstandes der Absaughaube 4 zur Stirnfläche 16 des Lagerhalses 1, aber auch zur Befestigung der Absaughaube 4 am Lagerhals 1 sind drei gleiche Trägerzapfen 8 nach Fig. 1 vorgesehen, von denen in Fig. 2 der besseren Übersichtlichkeit halber nur einer dargestellt ist. Der Trägerzapfen 8 ist an seinem unteren, der Absaughaube 4 zugewandten Ende fest mit der Radialwand 12 verschraubt. An seinem gegenüberliegenden freien Ende 7 ist ein Magnet 6 in Form eines Permanentmagneten befestigt. Ringsum den Magneten 6 verläuft eine um das freie Ende 7 des Trägerzapfens 8 umlaufende Umfangsnut 11. In diese greift ein weiter unten im Zusammenhang mit den Fig. 3 und 4 beschriebener Bajonettring 9 ein, der um die Drehachse 2 bzw. um die Werkzeugspindel 3 umlaufend an der Stirnfläche des Lagerhalses 1 befestigt ist. Durch die gezeigte Anordnung ist ein formschlüssiger Schnellverschluss in Form eines Bajonettverschlusses 5 zwischen der Absaughaube 4 und dem Lagerhals 1 gebildet, mittels dessen die Absaughaube 4 lösbar und auswechselbar am Lagerhals 1 befestigt ist. Die formschlüssige Verbindung zwischen beiden Baugruppen wird unterstützt durch die Haltekraft der Magnete 6. Anstelle des Bajonettverschlusses 5 kann auch eine abweichende Bauform eines Schnellverschlusses beispielsweise in Form eines Schnappverschlusses oder dergleichen vorgesehen sein. Bevorzugt ist ein solcher Schnellverschluss in einer Weise ausgebildet, dass er automatisiert mittels eines selbsttätigen Werkzeugwechslers betätigt werden kann.

Fig. 3 zeigt eine Draufsicht des Bajonettringes 9 nach Fig. 2. Dieser ist im Wesentlichen kreisringförmig aus einem ebenen Blech gebildet und weist insgesamt vier Schraublöcher 20 zur flächigen Verschraubung mit der Stirnfläche 16 des Lagerhalses 1 (Fig. 2) auf. Darüber hinaus weist er für jeden der drei Trägerzapfen 8 (Fig. 1) je einen radial nach innen hervorstehenden, einteilig angeformten Haltevorsprung 10 auf. Bei einer abweichenden Anzahl von Trägerzapfen 8 (Fig. 1) ist eine entsprechende Anzahl von Haltevorsprüngen 10 vorzusehen.

Fig. 4 zeigt eine Unteransicht der Anordnung nach Fig. 1, demnach die Absaughaube 4, deren Trägerzapfen 8 und der Bajonettring 9 konzentrisch zur Drehachse 2 angeordnet sind. Im montierten und betriebsbereiten Zustand der Anordnung greifen die Haltevorsprünge 10 des Bajonettringes 9 radial von außen nach innen in je eine Umfangsnut 11 (Fig. 2) je eines Trägerzapfens 8 ein, wodurch die Absaughaube 4 formschlüssig am Lagerhals 1 befestigt ist. Es kann aber auch eine Anordnung zweckmäßig sein, bei der die Haltevorsprünge 10 des Bajonettringes 9 radial nach außen weisen, wobei dann die Trägerzapfen 8 oder andere geeignete Aufnahmeelemente der Absaughaube 4 radial außenseitig davon anzuordnen sind. Außerdem kann ein insoweit umgekehrter Aufbau vorgesehen sein, als der Bajonettring 9 an der Absaughaube 4 und die Gegenstücke hierzu beispielsweise in Form der Trägerzapfen 8 am Lagerhals 1 befestigt sind.

Der gezeigte Bajonettverschluss 5 wird gelöst, indem die Absaughaube 4 um die Drehachse 2 herum um einen bestimmten Winkel relativ zum Lagerhals 1 verdreht wird, in dessen Folge dann die Haltevorsprünge 10 nicht mehr in die Trägerzapfen 8 eingreifen. In diesem Zustand halten jedoch die Magnete 6 (Fig. 2) die Absaughaube 4 immer noch haftend am Lagerhals 1, so dass diese nicht durch ihr Eigengewicht vom Lagerhals 1 abfallen kann. Zum abschließenden Entfernen der Absaughaube 4 muss die Magnetkraft aktiv überwunden werden, indem die Saughaube 4 axial abgezogen wird.

Der Montagevorgang der Absaughaube 4 erfolgt in umgekehrter Reihenfolge: Zunächst wird die Absaughaube 4 axial an die Stirnfläche 16 (Fig. 2) des Lagerhalses 1 herangeführt und mittels der Magnete 6 dort angeheftet. Die Magnete 6 verhindern ein Abfallen der auf diese Weise provisorisch angehefteten Absaughaube 4, lassen jedoch eine Drehung gegenüber dem Lagerhals 1 zu. Durch diese Drehung werden die Trägerzapfen 8 in Eingriff mit den Haltevorsprüngen 10 des Bajonettringes 9 gebracht. In diesem Zustand ist die Absaughaube 4 formschlüssig, unterstützt durch Magnetkraft, am Lagerhals 1 befestigt.

Der vorstehend beschriebene Vorgang des Lösens und Schließens kann automatisiert durch einen selbsttätigen Werkzeugwechsler erfolgen, der auch die Auswechslung des Werkzeuges 18 (Fig. 2) vornehmen kann. Hierdurch ist ein problemloser Zugriff auf das als Schrumpffutter ausgeführte Spannfutter 14 ohne Beeinträchtigung durch die Absaughaube 4 möglich.

Trotz der verschleißfreien Ausgestaltung kann die Absaughaube 4 insgesamt sehr kleinvolumig ausgestaltet und an die Größe des jeweils zum Einsatz kommenden Werkzeuges 18 angepasst werden. Hierdurch ist ein zielgerichtetes Absaugen der Späne unmittelbar am Entstehungsort möglich. Mit verschiedenen Werkzeugen 18 können auch verschiedene, daran angepasste Absaughauben 4 ausgewählt und in erfindungsgemäßer Weise am Lagerhals 1 befestigt werden.

## Patentansprüche

1. Maschinenanordnung zum zerspanenden Bearbeiten von Werkstücken, umfassend einen Lagerhals (1), eine im Lagerhals (1) um eine Drehachse (2) drehend antreibbar gelagerte Werkzeugspindel (3) und eine die Werkzeugspindel (3) umgreifende Absaughaube (4), wobei die Absaughaube (4) am Lagerhals (1) auswechselbar und ohne Kontakt mit der Werkzeugspindel (3) befestigt ist,
**dadurch gekennzeichnet, dass** zur axialen Sicherung der Absaughaube (3) gegenüber dem Lagerhals (1) mindestens ein Magnet (6) vorgesehen ist.

2. Maschinenanordnung nach Anspruch 1,
**dadurch gekennzeichnet, dass** die Absaughaube (4) am Lagerhals (1) mittels eines Schnellverschlusses formschlüssig befestigt ist.

3. Maschinenanordnung nach Anspruch 2,
**dadurch gekennzeichnet, dass** der Schnellverschluss durch einen Bajonettverschluss (5) gebildet ist.

4. Maschinenanordnung nach einem der Ansprüche 1 bis 3,
**dadurch gekennzeichnet, dass** zur axialen Sicherung der Absaughaube (3) gegenüber dem Lagerhals (1) drei um die Drehachse (2) herum verteilte Magnete (6) vorgesehen sind.

5. Maschinenanordnung nach einem der Ansprüche 1 bis 4,
**dadurch gekennzeichnet, dass** der mindestens eine Magnet (6) an der Absaughaube (4) befestigt und insbesondere an einem freien Ende (7) eines Trägerzapfens (8) angeordnet ist.

6. Maschinenanordnung nach einem der Ansprüche 1 bis 5,
**dadurch gekennzeichnet, dass** zur Bildung des Bajonettverschlusses (5) ein am Lagerhals (1) befestigter Bajonettring (9) mit mindestens einem radial hervorstehenden Haltevorsprung (10) vorgesehen ist, und dass der mindestens eine Trägerzapfen (8) einen Schlitz insbesondere in Form einer Umfangsnut (11) zur Aufnahme des Haltevorsprunges (10) aufweist.

7. Maschinenanordnung nach einem der Ansprüche 1 bis 6,
**dadurch gekennzeichnet, dass** die Absaughaube (3) eine Radialwand (12) mit einer mittigen Spindelöffnung (13) aufweist, wobei die Spindelöffnung (13) ein Spannfutter (14) der Werkzeugspindel (3) mit einem Spalt (15) berührungsfrei umschließt.

8. Maschinenanordnung nach einem der Ansprüche 1 bis 7,
**dadurch gekennzeichnet, dass** die Werkzeugspindel (3) eine Nenndrehzahl von > 15.000 min⁻¹, insbesondere von > 20.000 min⁻¹ aufweist, und dass ein Spannfutter (14) der Werkzeugspindel (3) als Schrumpffutter oder Dehnspannfutter ausgebildet ist.

## Claims

1. A machine assembly for machining workpieces, comprising a bearing neck (1), a tool spindle (3) mounted in the bearing neck (1) and rotatably drivable about a rotational axis (2) and an extraction hood (4) enclosing the tool spindle (3), wherein the extraction hood (4) is fastened to the bearing neck (1) in an exchangeable manner without contacting the tool spindle (3),
**characterized in that** for axially securing the extraction hood (4) with respect to the bearing neck (1), at least one magnet (6) is provided.

2. The machine assembly according to claim 1,
**characterized in that** the extraction hood (4) is positively fixed on the bearing neck (1) by means of a quick-release fastener.

3. The machine assembly according to claim 2,
**characterized in that** the quick-release fastener is formed by a bayonet lock (5).

4. The machine assembly according to any one of the claims 1 to 3,
**characterized in that** for axially securing the extraction hood (4) with respect to the bearing neck (1), three magnets (6) distributed around the rotational axis (2) are provided.

5. The machine assembly according to any one of the claims 1 to 4,
**characterized in that** the at least one magnet (6) is fastened to the extraction hood (4) and is in particular arranged at a free end (7) of a support pin (8) .

6. The machine assembly according to any one of the claims 1 to 5,
**characterized in that** for forming the bayonet lock (5), a bayonet ring (9) is provided which has at least one radially protruding retaining projection (10) and is fastened on the bearing neck (1), and that the at least one support pin (8) has a slot in particular in the form of a circumferential groove (11) for receiving the retaining projection (10).

7. The machine assembly according to any one of the claims 1 to 6,
**characterized in that** the extraction hood (4) has a radial wall (12) with a central spindle opening (13), wherein the spindle opening (13) encloses a chuck (14) of the tool spindle (3) in a contact-free manner by keeping a gap (15) therebetween.

8. The machine assembly according to any one of the claims 1 to 7,
**characterized in that** the tool spindle (3) has a rated speed of > 15,000 min⁻¹, in particular of > 20,000 min⁻¹ and that a chuck (14) of the tool spindle (3) is configured as a shrink chuck or an expansion chuck.

## Revendications

1. Agencement de machine pour l'usinage par enlèvement de copeaux de pièces, comprenantun collet de palier (1), unebroche d'outil (3) disposée en pouvant être entraînée par rotation sur un axe de rotation (2) dans le collet de palier (1), et un capot d'aspiration (4) entourant la broche d'outil (3), sachant que le capot d'aspiration (4) est fixé de manière amovible sur le collet de palier (1) et sans contact avec la broche d'outil (3),
**caractérisé en ce qu'**au moins un aimant (6) est prévu pour la fixation axiale du capot d'aspiration (4) par rapport au collet de palier (1).

2. Agencement de machine selon la revendication 1,
**caractérisé en ce que** le capot d'aspiration (4) est fixé sur le collet de palier (1) par adhérence de forme au moyen d'une fermeture rapide.

3. Agencement de machine selon la revendication 2,
**caractérisé en ce que** la fermeture rapide est formée par une fermeture à baïonnette (5).

4. Agencement de machine selon l'une des revendications 1 à 3,
**caractérisé en ce que** trois aimants (6) répartis autour de l'axe de rotation sont prévus pour la fixation axiale du capot d'aspiration (4) par rapport au collet de palier (1).

5. Agencement de machine selon l'une des revendications 1 à 4,
**caractérisé en ce que** l'au moins un aimant (6) est fixé sur le capot d'aspiration (4) et est disposé en particulier sur une extrémité libre (7) d'un tourillon porteur (8).

6. Agencement de machine selon l'une des revendications 1 à 5,
**caractérisé en ce que** pour former la fermeture à baïonnette (5), une bague baïonnette (9) fixée sur le collet de palier (1), comprenant au moins une saillie de fixation (10) faisant saillie radialement,est prévue, et **en ce que** l'au moins un tourillon porteur (8) présente une fente,en particulier sous forme d'une rainure périphérique (11), pour recevoir la saillie de fixation (10).

7. Agencement de machine selon l'une des revendications 1 à 6,
**caractérisé en ce que** le capot d'aspiration (4) présente une paroi radiale (12) avec une ouverture de broche (13) centrale, sachant que l'ouverture de broche (13) entoure sans contact,avec une fente (15), un mandrin de serrage (14) de la broche d'outil (3).

8. Agencement de machine selon l'une des revendications 1 à 7,
**caractérisé en ce que** la broche d'outil (3) présente une vitesse de rotation nominale de > 15 000 min⁻¹, en particulier de > 20 000 min⁻¹ et **en ce qu'**un mandrin de serrage (14) de la broche d'outil (3) est formé en tant que mandrin pour frettage ou extensible.
